# EUROPEAN PATENT SPECIFICATION

(11) **EP 0 674 676 B1**
(45) Date of publication and mention of the grant of the patent: **30.07.1997**
(21) Application number: 94903789.9
(22) Date of filing: 13.12.1993
(51) Int. Cl.: C08G 77/442, C08F 297/00

(54) **PROCESS FOR THE PREPARATION OF POLYDIMETHYLSILOXANE BLOCK COPOLYMERS**
VERFAHREN ZUR HERSTELLUNG VON POLYDIMETHYLBLOCKCOPOLYMEREN
PROCEDE DE PREPARATION DE COPOLYMERES EN BLOC DE POLYDIMETHYLSILOXANE

(30) Priority: 15.12.1992 US 990587
(43) Date of publication of application: 04.10.1995
(73) Proprietor: SHELL INTERNATIONALE RESEARCH MAATSCHAPPIJ B.V., 2596 HR Den Haag (NL)
(72) Inventor: HOXMEIER, Ronald, James, Houston, TX 77082 (US)
(86) International application number: PCT/EP93/03558
(87) International publication number: WO 94/13728

(56) References cited:
- GB-A- 1 267 644
- GB-A- 1 308 459

## Description

The present invention relates to a process for the preparation of polydimethylsiloxane -block copolymers. More specifically, the present invention relates to a process for the preparation of block copolymers comprising a first polymer block of anionically polymerizable monomer(s) and a second block of polydimethylsiloxane.

From J.C. Saam et al., MACROMOLECULES Vol. 3, No. 1 p.1 (1970) a process for preparing polystyrene-polydimethylsiloxane diblock copolymers is known comprising the polymerization of hexamethylcyclotrisiloxane with living i.e. lithium-terminated, polystyrene. Accordingly, the process disclosed involves first preparing living polystyrene chains by anionically polymerizing styrene in a hydrocarbon solvent in the presence of an alkyllithium initiator, followed by the addition of a first portion of hexamethylcyclotrisiloxane. After about 1 hour stirring at 50-60°C the typical orange colour of the living polystyrene chains had disappeared indicating that the cross-over reaction between the siloxane monomer and the living polystyrene chains had taken place. Subsequently, the remaining hexamethylcyclotrisiloxane was introduced together with tetrahydrofuran serving as the polymerization promoter. After about 4 hours the polymerization was complete and the reaction was terminated.

On the other hand, it was known from British Patent Specification No. 1267 644 to prepare block copolymers, comprising an aromatic containing organic block and a silyl containing block represented by the formula: 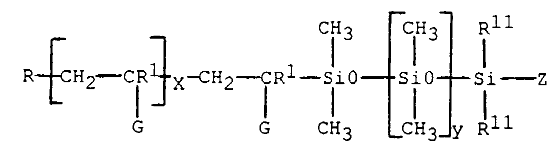 wherein R is a monovalent hydrocarbon radical having from 1 to 30 inclusive carbon atoms, R¹ is a hydrogen atom or a methyl radical, each R¹¹ is a monovalent hydrocarbon radical having from 1 to 18 inclusive carbon atoms, Z is a R¹¹ radical or a hydroxyl radical, G is a monovalent aromatic radical consisting of from 1 to 3 benzenoid rings in which said rings may each have up to 3 aliphatic organic substituents selected from alkyl radicals, cycloalkyl radicals and alkoxy radicals, each of 1 to 6 carbon atoms, and in G no aliphatic organic substituent which is ortho to the -CR¹- group has more than one carbon atom, x has an average value of from 20 to 5000 inclusive and y has an average value of from 20 to 5000 inclusive, the block copolymer having a molecular weight of from 7000 to 1,000,000 inclusive, 20 to 70 per cent by weight being silicon containing units and 30 to 80 per cent by weight being units of the organic block, by a process comprising:
(A) mixing under conditions excluding oxygen, water and acidic materials
   (1) a vinyl aromatic compound of the formula CH₂=CR'G in which R¹ and G are as hereinbefore defined
   (2) an organolithium compound of the formula LiR in which R is as hereinbefore defined,
   the mixing of (1) and (2) being in the presence of at least 70 per cent by weight of hydrocarbon solvent, based on the total weight of the solution;
(B) maintaining the resulting mixture of (A) at a temperature below the reflux temperature and above the freezing point temperature until the CH₂ = CR'G has polymerized;
(C) mixing under conditions excluding oxygen, water and acidic materials
   (3) hexamethylcyclotrisiloxane, and
   (4) a hydrocarbon solvent wherein the hydrocarbon solvent is present in sufficient quantity to provide a mixture of at least 50 per cent by weight of (4) based on the total weight of (3) and (4);
(D) adding to the resulting product of (B) a quantity of the mixture produced in (C) sufficient to provide at least one molecule of hexamethlcyclotrisiloxane per lithium atom in the resulting product of (B) and no more than 40 per cent by weight of the total mixture of (C), without exposing any of the mixtures to oxygen, water or acidic materials;
(E) maintaining the resulting mixture of (D) at a temperature above -50°C and no greater than the reflux temperature of the mixture for at least 30 minutes and until the colour of the mixture disappears; thereafter
(F) adding the remaining mixture of (C) and a polymerisation promoter solvent to the resulting mixture of (E);
(G) maintaining the resulting mixture from (F) at a temperature above -50°C and no greater than the reflux temperature of the mixture for at least 30 minutes; thereafter
(H) adding a compound selected from acetic acid or Z R"₂ SiCl, wherein each R" an Z are as defined hereinbefore, in an amount sufficient to provide at least one molecule of compound per lithium atom of the mixture
(I) recovering the hereinbefore specified block copolymer

Moreover, from British Patent Specification no. 1308 459, a process was known for the preparation of siloxane organic block copolymer, which comprised:
(1) anionically polymerising one or more vinyl or diene monomers in the presence of a lithium-containing carbanion-producing polymerization initiator and in particular an alkyl lithium compound, and an aprotic solvent,
(2) contacting the polymeric anion obtained from (1) with a cyclic organotrisiloxane or a cyclic organosiliethylene-siloxane, and
(3) allowing the cyclic organosilicon compound to polymerise.

Hence, the manufacture of block copolymers of polystyrene and polydimethylsiloxane according to the references discussed above involved two separate polymerization steps. First, polystyrene is anionically polymerized to the desired molecular weight and only then can the hexamethylcyclotrisiloxane be added to polymerize the polydimethylsiloxane block on the polystyrene polymer. This multiple polymerization method was generally believed to be necessary, because polymerizing such polymers in the presence of both monomers at the same time was expected to lead to tapering between the blocks which causes poor phase separation and broad molecular weight distribution in the final polymer, thereby affecting properties negatively, e.g., low strength.

Thus, it would be advantageous to be able to produce block copolymers of vinyl aromatic hydrocarbons and/or conjugated dienes on the one hand and polydimethylsiloxane on the oher hand in the presence of both monomers without causing any tapering between the blocks and an acceptably narrow molecular weight distribution in the block copolymer produced.

Accordingly, the present invention relates to a process for the preparation of a block copolymer comprising a first polymer block of an anionically polymerizable monomer selected from the group consisting of monovinyl aromatic hydrocarbons, conjugated dienes and mixtures thereof, and a second polymer block of polydimethylsiloxane, said process comprising the steps of:
(a) combining at a temperature of from -10 to 60°C into one reaction mixture at least the anionically polymerizable monomer(s), an organoalkali metal initiator, hexamethyl-cyclotrisiloxane and a polar pomoter, thus effecting polymerization of the anionically polymerizable monomer(s);
(b) allowing the polymerization to proceed until the block polymerization of the anionically monomer(s) and the subsequent cross-over reaction between the living polymer chains and the hexamethylcylotrisiloxane is complete;
(c) raising the temperature to a temperature in the range of from above 60 to 120°C, thus effecting polymerization of hexamethyl-cyclotrisiloxane at the end of the living polymer block obtained in step (a); and
(d) terminating the polymerization.

In the method of the present invention, the monomer(s), an organo alkali metal promoter, hexamethylcyclotrisiloxane and a polar promoter are mixed together in the solvent at a temperature of -10°C to 60°C. The polymerization of the vinyl aromatic hydrocarbon and/or conjugated diene monomer(s) is allowed to proceed until the colour of the monomer - Li⁺ species (which is initially produced) fades. This, namely, is a clear indication that the polymerization of the anionically polymerizable monomers has been completed and that the cross-over reaction between the siloxane monomer and the living polymer chains has taken place. The temperature is then raised to a temperature in the range of from above 60 to 120 °C, causing the hexamethylcyclotrisiloxane to polvmerize at the end of the living vinyl aromatic hydrocarbon and/or conjugated diene monomer(s) polymer chains. Finally, the polymerization is terminated.

As is well known, polymers containing aromatic unsaturation can be suitably prepared by anionically polymerizing a vinyl aromatic hydrocarbon monomer using anionic polymerization initiators. Such polymers may be prepared using bulk, solution or emulsion techniques. In any case, the polymer will generally be recovered as a solid such as a crumb, a powder a pellet or the like. Conjugated dienes may be used in place of the vinyl aromatic hydrocarbon to form polydiene/polydimethylsiloxane polymers. Mixtures of vinyl aromatic hydrocarbons and conjugated dienes may also be anionically polymerized herein, thus resulting in random or tapered blocks, Suitable conjugated dienes which may be polymerized anionically include those conjugated dienes containing from 4 to 12 carbon atoms such as 1,3-butadiene, isoprene, piperylene, methylpentadiene, phenylbutadiene, 3,4-dimethyl-1,3-hexadiene, 4,5-diethyl-1,3-octadiene and the like. Butadiene and isoprene are the preferred conjugated dienes. Suitable monovinyl aromatic hydrocarbons include styrene and various alkyl-substituted styrenes, such as α-methylstyrene and p-methylstyrene. Styrene is most preferred.

In the process of the present invention it is preferred to use a monovinyl aromatic hydrocarbon, preferably styrene, as the sole anionically polymerizable monomer.

Suitable anionic polymerization initiators include Group IA metals, their alkyls, amides, silanolates, naphthalides biphenyls and anthracenyl derivatives. Preferably, an organo alkali metal compound is used. The most preferred anionic polymerization initiators are alkyl lithium compounds, such as n-butyllithium and sec-butyllithium.

The polydimethylsiloxane polymer is formed by polymerizing hexamethylcyclotrisiloxane, (Me₂SiO)₃, in the presence of a polar promoter. The promoter can be, for example, tetrahydrofuran, diethoxyethane, ethyleneglycoldimethyl ether, N,N,N',N'-tetramethylethylenediamine, etc. Its purpose is to decrease the reaction time of the polymerization of hexamethylcyclotrisiloxane. The polymerization reaction is carried out at a temperature of from above 60 to 120 °C and the amount of promoter used may range from as low as 100 ppm to as high as 100% by weight (i.e the polar promoter is used as solvent) based on total polymerization mixture Conveniently, the promoter is used in an amount of from 0.5 to 10% by weight based on total polymerization mixture. It will be clear that the higher the amount of promoter the shorter the reaction time will be.

The process of the present invention can be suitabiv concluded in a hydrocarbon solvent. In this case, any of the solvents known in the prior art to be useful in anionic polymerization processes may be used. The most suitable solvents include straight and branched-chain hydrocarbons such as e.g. pentane, hexane and heptane and cycloaliphatic hydrocarbons such as cyclopentane, cyclohexane and cycloheptane. Mixtures of two or more of such solvents may also be conveniently used.

Alternatively, no hydrocarbon solvent is used. In this case the monovinyl aromatic hydrocarbon initially serves as the solvent in step (a) for the other components, while the reaction heat produced upon polymerization of this monovinyl aromatic hydrocarbon in step (b) melts the hexamethylcyclotrisiloxane, which then serves as the solvent for the living poly(monovinyl aromatic hydrocarbon) polymer produced. This is possible, because the polymerization of a monovinyl aromatic hydrocarbon, suitably styrene, is an exothermic reaction. Accordingly, as the styrene polymerization proceeds, the generated reaction heat will contribute to raising the temperature of the reaction mixture. Eventually, the hexamethylcyclotrisiloxane will melt (at about 63°C). The molten hexamethylcyclotrisiloxane will then serve as the solvent for the living polystyrene polymer formed and for the other components present. As the temperature rises (to above 60 °C), the polymerization of the hexamethylcyclotrisiloxane will proceed on the ends of the living polystyrene chains. Suitably, this latter polymerization takes place at a temperature between 65 °C and 100 °C for 2 to 5 hours.

The unique aspect of the present invention is that the polymerizations of the anionically polymerizable monomers as well as of the siloxane monomer are carried out in one and the same reaction mixture wherein all of the reactants and promoters are mixed together simultaneously. Thus, the monovinyl aromatic hydrocarbon and/or conjugated diene monomers, the organic alkali metal promoter, the hexamethylcyclotrisiloxane and the polar promoter are mixed together. If solvent is used, it may be selected from the solvents described above. Initially, the temperature is within the range of -10 to 60 °C, preferably -5 to 25°C, to allow the polymerization of the polystyrene to proceed. At the outset, the reaction mixture takes on an orange colour due to the presence of the PS⁻Li⁺ species, if styrene is used as the sole anionically polymerizable monomer This preferably takes 1 to 1.5 hours. When this colour fades, the polystyrene reaction and the subsequent cross-over reaction between the lithiated sides of the living polymer chains and the hexamethylcyclotrisiloxane monomer is essentially complete. The temperature is then raised to a temperature in the range of from above 60 to 120 °C, preferably 65 to 100 °C, using the heat of reaction of the polystyrene polymerization and external means, if necessary. After a period of 2 to 5 hours, preferably 3 to 4 hours, during which the hexamethylcyclo-trisiloxane polymerizes on the ends of the polystyrene chains, the polymerization is terminated and the polystyrene/polydimethysiloxane block copolymer is recovered.

As stated above, it is a preferred embodiment of the present invention that the process be carried out in the absence of an added solvent. This has significant advantages, especially from a capital standpoint. Without the necessity of handling a solvent, the process utilizes relatively small reactors and there is no need for solvent removal facilities or solvent recycle equipment. Process cycle times are also reduced due to faster kinetics of the reaction. The reaction may take place in an extruder.

The last step of the process is termination of polymerization. This can be accomplished by adding e.g. trimethylchlorosilane or vinyldimethylchlorosilane to the polymerization solution. Other methods of termination include the addition of dimethyl dichlorosilane, as a result of which coupled tri-block polymers could be prepared.

The process of the present invention works very well because it was found that styrene (and/or the dienes) reacts much faster with itself than it will with hexamethylcyclotrisiloxane in the selected temperature range of from -10 to 60 °C. This is because at such temperatures the polymerization kinetics are much faster than the "crossover" reaction kinetics (the reaction between styrene or a short polystyrene chain and hexamethylcyclotrisiloxane). Unlike the block copolymerization of two dienes or styrene and a diene, tapering (or randomization which causes broad molecular weight distribution) between blocks hardly occurs because the chain ends of polydimethylsiloxane cannot crossover to styrene monomer due to insufficient reactivity at the selected reaction temperature. If some crossover to siloxane occurs before all of the styrene monomer is consumed, the only result will be a somewhat broader molecular weight distribution of the polystyrene block. However, the broadening of the molecular weight distribution is tolerable and allows the production of polymers at greatly reduced costs and reaction times.

The polymers produced in accordance with this invention are useful in surface-inactive coatings and in impact modification of engineering thermoplastics, since they incorporate the strength of vinyl aromatic hydrocarbons such as polystyrene and the high flexibility of polydimethylsiloxane and its extremely low solubility parameter compared with polystyrene.

### Example 1

To a 100 ml polymerization bottle was added 10 g (Me₂SiO)₃ monomer, 40 g cyclohexane, 3.3 g styrene monomer and 50 mg diethoxyethane promoter (1000 ppm). The solution was titrated at 25 °C with sec-butyllithium (s-buLi) solution (1.4 M) until the yellow colour due to PS⁻Li⁺ persisted for about 30 seconds. Then 0.67 mmoles of s-buLi (in cyclohexane) was added to initiate polymerization.

The polymerization was allowed to proceed at room temperature with stirring until the orange colour due to PS⁻Li⁺ had dissipated (about 90 min.) indicating that the styrene block polymerization was complete and that all living chain ends had crossed over to the siloxane monomer. The polystyrene block peak MW was about 5000 by gel permeation chromatography (GPC).

Then 0.5 g additional diethoxyethane was added (total promoter concentration about 1% by weight) and the reaction was heated at 80 °C for 3 hours to polymerize the polydimethylsiloxane block (PDMS). After 3 hours, 2 mmoles Me₃SiCl was added to terminate the polymerization and the reaction mixture was heated at 80 °C for 30 minutes and then cooled.

GPC analysis showed the final product to have peak Ms (polystyrene equivalent MW) = 12,900. The molecular weight distribution value (MWD) was 1.11 which compares well with conventional anionic polymerization values for MWD (1.01 to 1.10). The polymer was precipitated with isopropanol and dried.

### Example 2

This reaction was identical to Example 1 except that the styrene block was polymerized at 0 °C for 90 minutes. Ms = 12,800 for the final product with MWD = 1.08.

The following examples describe solventless sequential PS-PDMS block copolymer polymerizations in the presence of both monomers.

### Example 3

To a 50 ml polymerization bottle was added 10 g (Me₂SiO)₃ monomer, 3.3 g styrene monomer and 14 mg (1000 ppm) diethoxyethane promoter. The system was cooled to 0 °C with stirring and 0.4 mmoles s-buLi (in cyclohexane) was injected. A vigorous exotherm was observed with the appearance of a red colour indicative of PS⁻Li⁺, Within 30 seconds the colour had dissipated indicating that the styrene polymerization and the crossover reaction with siloxane monomer were both complete. This compares with 90 minutes at 0 °C in solution (Example 2). As the liquid styrene monomer was consumed, the system passed through a transient fused mass state [consisting of both PS⁻Li⁺ polymer and solid (Me₂SiO)₃ monomer]. However, as the exotherm rose above the (Me₂SiO)₃ melting point of 63 °C, the system liquified again and the PS⁻Li⁺ dissolved in the siloxane monomer (now the solvent).

After the PS⁻Li⁺ colour had disappeared, 0.4 g additional diethoxyethane was added to the system (total promoter concentration = 3% by weight) and the temperature was increased to 80 °C and maintained there for 2 hours. The viscosity increased steadily during this period as the (Me₂SiO)₃ was consumed, eventually giving a viscous syrup of PS-PDMS polymer in trace monomer and promoter.

After two hours, the polymerization was terminated by addition of 1.2 mmoles of Me₃SiCl. The reaction was heated at 80 °C for 30 minutes and then cooled. The polymer was dissolved in tetrahydrofuran, precipitated with isopropanol and dried.

GPC analysis showed peak Ms - 16,900 with MWD = 1.32. The PS block was calculated to be 8,200.

### Example 4

This reaction was identical to Example 3 except that the PDMS block was allowed to polymerize for 3 hours. Peak Ms = 20,800 for the final product with MWD = 1.35. More complete polymerization of the siloxane monomer was obtained in this experiment with longer reaction time as evidenced by the higher MW of the final product.

## Claims

1. Process for the preparation of a block copolymer comprising a first polymer block of an anionically polymerizable monomer selected from the group consisting of monovinyl aromatic hydrocarbons, conjugated dienes and mixtures thereof, and a second polymer block of polydimethylsiloxane, said process comprising the steps of:
(a) combining at a temperature of from -10 to 60°C into one reaction mixture at least the anionically polymerizable monomer(s), an organoalkali metal initiator, hexamethylcyclotrisiloxane and a polar promoter, thus effecting polymerization of the anionically polymerizable monomer(s);
(b) allowing the polymerization to proceed until the block polymerization of the anionically monomer(s) and the subsequent cross-over reaction between the living polymer chains and the hexamethylcyclotrisiloxane is complete;
(c) effecting polymerization of hexamethylcyclotrisiloxane at the end of the living polymer block obtained in step (a) at a temperature in the range of from above 60 to 120°C; and
(d) terminating the polymerization.

2. The process of claim 1, wherein the anionically polymerizable monomer is a monovinyl aromatic hydrocarbon.

3. The process of claim 2, wherein the monovinyl aromatic hydrocarbon is styrene.

4. The process of any one of claims 1 to 3, wherein steps (a) and (b) are conducted at a temperature in the range of from -5 to 25°C and wherein step (c) is carried out at a temperature in the range of from 65 to 100°C.

5. The process of any one of claims 1 to 4, wherein steps (a), (b), (c) and (d) are conducted in a hydrocarbon solvent.

6. The process of any one of claims 2 to 5, wherein in step (a) the monovinyl aromatic hydrocarbon initially serves as the solvent for the other components, while the reaction heat produced upon polymerization of this monovinyl aromatic hydrocarbon in step (b) melts the hexamethylcyclotrisiloxane, which then serves as the solvent for the living poly(monovinyl aromatic hydrocarbon) polymer produced.

## Patentansprüche

1. Verfahren zur Herstellung eines Blockcopolymers, enthaltend einen ersten Polymerblock aus einem anionisch polymerisierbaren Monomer aus der Gruppe bestehend aus monovinylaromatischen Kohlenwasserstoffen, konjugierten Dienen und deren Gemischen und einem zweiten Polymerblock aus Polydimethylsiloxan, bei dem man:
(a) in einer Reaktionsmischung bei einer Temperatur von -10 bis 60°C mindestens das anionisch polymerisierbare Monomer bzw. die anionisch polymerisierbaren Monomere, einen Organoalkalimetall-Initiator, Hexamethylcyclotrisiloxan und einen polaren Promotor vereinigt und so das anionisch polymerisierbare Monomer bzw. die anionisch polymerisierbaren Monomere polymerisiert;
b) die Polymerisation so lange fortschreiten läßt, bis die Blockpolymerisation des anionisch Monomers bzw. der anionisch Monomere und die anschließende Crossover-Reaktion zwischen den lebenden Polymerketten und dem Hexamethylcyclotrisiloxan vollständig ist;
c) am Ende des in Schritt (a) erhaltenen lebenden Polymerblocks Hexamethylcyclotrisiloxan bei einer Temperatur im Bereich von über 60 bis 120°C polymerisiert und
d) die Polymerisation beendet.

2. Verfahren nach Anspruch 1, bei dem man als anionisch polymerisierbares Monomer einen monovinylaromatischen Kohlenwasserstoff einsetzt.

3. Verfahren nach Anspruch 2, bei dem man als monovinylaromatischen Kohlenwasserstoff Styrol einsetzt.

4. Verfahren nach einem der Ansprüche 1 bis 3, bei dem man die Schritte (a) und (b) bei einer Temperatur im Bereich von -5 bis 25°C und Schritt (c) bei einer Temperatur im Bereich von 65 bis 100°C durchführt.

5. Verfahren nach einem der Ansprüche 1 bis 4, bei dem man die Schritte (a), (b), (c) und (d) in einem Kohlenwasserstoff-Lösungsmittel durchführt.

6. Verfahren nach einem der Ansprüche 2 bis 5, bei dem in Schritt (a) der monovinylaromatische Kohlenwasserstoff anfangs als Lösungsmittel für die anderen Komponenten dient und die bei der Polymerisation dieses monovinylaromatischen Kohlenwasserstoffs entstehende Reaktionswärme in Schritt (b) das Hexamethylcyclotrisiloxan zum Schmelzen bringt, welches dann als Lösungsmittel für das entstandene lebende Polymer aus monovinylaromatischem Kohlenwasserstoff dient.

## Revendications

1. Procédé de préparation d'un copolymère séquencé comprenant une première séquence polymérique d'un monomère polymérisable par voie anionique, choisi dans le groupe formé par les hydrocarbures monovinylaromatiques, les diènes conjugués et leurs mélanges et une seconde séquence polymérique de polydiméthylsiloxane, le procédé en question comprenant les étapes consistant à :
(a) combiner, à une température de -10 à 60°C, dans un mélange réactionnel, au moins le ou les monomères polymérisables par voie anionique, un amorceur organique d'un métal alcalin, d'hexaméthylcyclotrisiloxane et un promoteur polaire, de façon à réaliser la polymérisation du ou des monomères polymérisables par voie anionique,
(b) permettre à la polymérisation de se dérouler jusqu'à ce que la polymérisation séquencée du ou des monomères polymérisables par voie anionique et jusqu'à ce que la réaction d'enjambement subséquente entre les chaînes polymériques suivantes l'hexaméthylcyclotrisiloxane soit achevée,
(c) élever la température jusqu'à une valeur qui varie depuis plus de 60°C jusqu'à 120°C, de manière à réaliser la polymérisation de l'hexaméthylcyclotrisiloxane, à la fin de la séquence polymérique vivante, obtenue à l'étape (a) et
(d) terminer la polymérisation.

2. Procédé suivant la revendication 1, caractérisé en ce que le monomère polymérisable par voie anionique est un hydrocarbure monovinylaromatique.

3. Procédé suivant la revendication 2, caractérisé en ce que l'hydrocarbure monovinylaromatique est le styrène.

4. Procédé suivant l'une quelconque des revendications 1 à 3, caractérisé en ce que l'on entreprend les étapes (a) et (b), à une température qui varie de -5°C à 25°C et en ce que l'on entreprend l'étape (c), à une température qui varie de 65°C à 100°C.

5. Procédé suivant l'une quelconque des revendications 1 à 4, caractérisé en ce que l'on entreprend les étapes (a), (b), (c) et (d), dans un solvant du type hydrocarbure.

6. Procédé suivant l'une quelconque des revendications 2 à 5, caractérisé en ce que, au cours de l'étape (a), l'hydrocarbure monovinylaromatique sert initialement de solvant pour les autres composants, cependant que la chaleur de réaction produite par la polymérisation de cet hydrocarbure monovinylaromatique dans l'étape (b) fait fondre l'hexaméthylcyclotrisiloxane, qui sert alors de solvant, pour le polymère de poly(hydrocarbure monovinylaromatique) vivant produit.
